# DEMANDE DE BREVET EUROPEEN

(11) **EP 1 110 843 A1**
(43) Date de publication de la demande: **27.06.2001**
(21) Numéro de dépôt: 00403380.9
(22) Date de dépôt: 01.12.2000
(51) Int. Cl.: B62D 1/184

(54) **Dispositif de blocage en position d'une colonne de direction réglable par exemple pour véhicule automobile**

(30) Priorité: 10.12.1999 FR 9915630
(71) Demandeur: Faurecia Industries, 92100 Boulogne-Billancourt (FR)
(72) Inventeur: Hoblingre, André, 90380 Roppe (FR)
(74) Mandataire: Habasque, Etienne Joel Jean-François

(57) **Abrégé**

Ce dispositif comportant une structure (1) de support de colonne, munie de deux flasques (2,3) entre lesquels est disposée la colonne (4) et un tirant rotatif (5) associé à des moyens de serrage des flasques autour de la colonne sous le contrôle d'un levier de manoeuvre (6), l'une des extrémités du tirant (5) étant associée à un écrou freiné (7) vissé sur une portion filetée (8) de ce tirant et à des moyens de roulement (9) interposés entre cet écrou (7) et une portion fixe (10) du dispositif, comportant deux rondelles (11,12) entre lesquelles sont disposés des organes de roulement (13), dont l'une (12) est adaptée pour être en appui sur la portion fixe (10) du dispositif et l'autre, sur l'écrou (7) porté par le _ tirant rotatif (5), est caractérisé en ce que des moyens (14) formant amortisseur du déplacement du tirant (5) et donc du levier (6), sont disposés autour des moyens de roulement (9) et comportent deux viroles complémentaires (15,16) entre lesquelles est disposé un matériau d'amortissement (17), dont l'une (15) est associée à la portion fixe du dispositif et l'autre (16), à l'écrou (7) porté par le tirant rotatif.

## Description

La présente invention concerne un dispositif de blocage en position d'une colonne de direction réglable notamment pour véhicule automobile.

On connaît déjà dans l'état de la technique, des dispositifs de blocage de ce type, qui comportent une structure de support de colonne adaptée pour être reliée au reste de la structure du véhicule et qui est munie de deux flasques entre lesquels est disposée la colonne et un tirant rotatif s'étendant entre les flasques, associé à des moyens de serrage des flasques autour de la colonne par rapprochement de ceux-ci, pour bloquer la colonne en position, sous le contrôle d'un levier de manoeuvre actionnable par un utilisateur et déplaçable entre une position escamotée de déverrouillage de la colonne pour permettre son réglage en position et une position active de verrouillage en position de celle-ci.

De tels dispositifs sont décrits par exemple dans les documents EP-0 592 278 et EP-0 600 700.

De plus, dans de tels dispositifs, l'une des extrémités du tirant est associée à un écrou freiné vissé sur une portion filetée de ce tirant pour permettre un réglage de la course de fonctionnement des moyens de blocage et à des moyens de roulement interposés entre cet écrou et une portion fixe du dispositif, telle que par exemple l'un des flasques de la structure de support, pour réduire les frottements entre ces pièces.

Ces moyens de roulement comportent deux rondelles entre lesquelles sont disposés des organes de roulement, l'une de ces rondelles étant adaptée pour coopérer avec la portion fixe du dispositif et l'autre, avec l'écrou porté par le tirant rotatif.

En fait, ces moyens de roulement peuvent comporter des butées à aiguilles ou à billes.

De façon générale également, les moyens de blocage comprennent des moyens à franchissement de point dur et l'on conçoit alors que la manoeuvre du levier entre ses positions active et escamotée se traduit pour l'utilisateur par des déplacements plus ou moins brutaux de celui-ci.

Le but de l'invention est donc de résoudre ces problèmes.

A cet effet, l'invention a pour objet un dispositif de blocage en position d'une colonne de direction réglable notamment pour véhicule automobile, du type comportant une structure de support de colonne adaptée pour être reliée au reste de la structure du véhicule et comportant deux flasques entre lesquels est disposée la colonne et un tirant rotatif s'étendant entre les flasques, associé à des moyens de serrage des flasques autour de la colonne par rapprochement de ceux-ci, pour bloquer la colonne en position, sous le contrôle d'un levier de manoeuvre actionnable par un utilisateur et déplaçable entre une position escamotée de déverrouillage de la colonne pour permettre son réglage en position et une position active de verrouillage en position de celle-ci, l'une des extrémités du tirant étant associée à un écrou freiné et vissé sur une portion filetée de ce tirant pour permettre un réglage de la course de fonctionnement des moyens de blocage et à des moyens de roulement interposés entre cet écrou et une portion fixe du dispositif, comportant deux rondelles entre lesquelles sont disposés des organes de roulement, dont l'une est adaptée pour être en appui sur une portion fixe du dispositif et l'autre, sur l'écrou porté par le tirant rotatif, caractérisé en ce que des moyens formant amortisseur du déplacement du tirant et donc du levier de manoeuvre, sont disposés autour des moyens formant roulement et comportent deux viroles complémentaires entre lesquelles est disposé un matériau amortisseur, dont l'une est associée à la rondelle des moyens de roulement associée à la portion fixe du dispositif et l'autre, à la rondelle de ceux-ci associée à l'écrou.

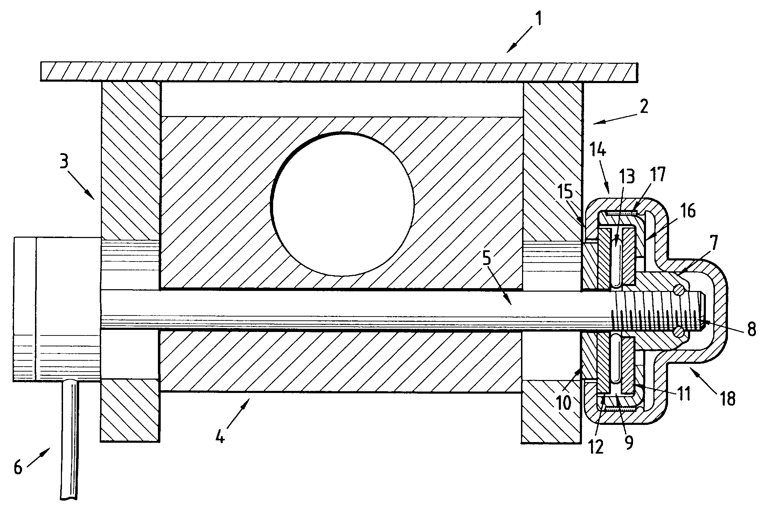

L'invention sera mieux comprise à la lecture de la description qui va suivre, donnée uniquement à titre d'exemple et faite en se référant au dessin annexé qui représente une vue en coupe partielle d'un dispositif de blocage selon l'invention.

On reconnaît en effet sur cette figure, un dispositif de blocage en position d'une colonne de direction réglable pour véhicule automobile.

De façon générale, un tel dispositif comporte une structure de support de colonne désignée par la référence générale 1, adaptée pour être reliée au reste de la structure du véhicule et comportant deux flasques désignés par les références 2 et 3, entre lesquels est disposée la colonne désignée par la référence générale 4.

De plus, un tel dispositif comporte un tirant rotatif désigné par la référence générale 5, associé à des moyens de serrage des flasques autour de la colonne par rapprochement de ceux-ci pour bloquer la colonne en position sous le contrôle d'un levier de manoeuvre désigné par la référence générale 6, actionnable par un utilisateur et déplaçable entre une position escamotée de déverrouillage de la colonne pour permettre son réglage en position et une position active de verrouillage en position de celle-ci.

De plus, l'une des extrémités du tirant 5 est associée à un écrou freiné désigné par la référence générale 7 sur cette figure, vissé sur une portion filetée 8 de l'extrémité du tirant 5 pour permettre un réglage de la course de fonctionnement des moyens de blocage.

Cette extrémité du tirant est également associée à des moyens de roulement désignés par la référence générale 9 interposés entre cet écrou 7 et une portion fixe du dispositif comme par exemple une rondelle 10 d'appui sur le flasque 2 de la structure de fixation.

En fait, ces moyens de roulement comportent par exemple deux rondelles désignées par les références 11 et 12 sur cette figure, entre lesquelles sont disposés des organes de roulement désignés par la référence générale 13 sur cette figure, constitués par exemple par des aiguilles ou des billes, l'une des rondelles 12 de ces moyens de roulement étant adaptée pour être associée à la portion fixe du dispositif et plus particulièrement à la rondelle 10 d'appui sur le flasque 2 de la structure de fixation et l'autre rondelle 11 étant adaptée pour être associée à l'écrou 7 porté par l'extrémité du tirant rotatif 5.

Selon l'invention, des moyens formant amortisseur de déplacement du tirant et donc du levier de manoeuvre, sont disposés autour des moyens de roulement 9, ces moyens formant amortisseur étant désignés par la référence générale 14 sur cette figure.

En fait, ces moyens formant amortisseur peuvent comporter deux viroles complémentaires désignées par les références 15 et 16 sur cette figure, entre lesquelles est disposé un matériau d'amortissement désigné par la référence générale 17.

L'une des viroles 15 est adaptée pour être associée à la rondelle 12 des moyens de roulement associée à la portion fixe du dispositif, tandis que l'autre virole 16 est adaptée pour être associée à la rondelle 11 des moyens de roulement associée à l'écrou et au tirant rotatif.

Dans l'exemple de réalisation représenté, un capot de protection désigné par la référence générale 18 adapté pour entourer l'extrémité du tirant et donc l'écrou, est également venu de matière avec la virole 15 des moyens d'amortissement.

On conçoit alors qu'une telle structure se présente sous la forme d'une cartouche adaptée pour être engagée sur l'extrémité du tirant en remplissant des fonctions de réduction des frottements par utilisation des moyens de roulement 9, tout en permettant un réglage de la course de fonctionnement des moyens de blocage grâce à l'écrou 7 et en assurant un amortissement des déplacements du levier de manoeuvre des moyens de blocage grâce au matériau d'amortissement et aux viroles.

En effet, les déplacements du levier de manoeuvre se traduisent par des déplacements du tirant qui eux-mêmes se traduisent par des déplacements en rotation de l'écrou associé à la rondelle 11 des moyens de roulement et à la virole 16 des moyens d'amortissement.

La rondelle 12 des moyens de roulement et la virole 15 des moyens d'amortissement étant fixes en position par rapport au reste du dispositif, les déplacements du levier sont amortis par le matériau d'amortissement 17 interposé entre les deux viroles.

Il va de soi bien entendu que d'autres modes de réalisation encore d'un tel dispositif peuvent être envisagés.

Ainsi par exemple, le capot 18 peut être réalisé d'une manière différente de celle représentée en étant par exemple venue de matière avec la virole 16 au lieu de la virole 15 comme cela est représenté.

## Revendications

1. Dispositif de blocage en position d'une colonne de direction réglable notamment pour véhicule automobile, du type comportant une structure (1) de support de colonne adaptée pour être reliée au reste de la structure du véhicule et comportant deux flasques (2,3) entre lesquels est disposée la colonne (4) et un tirant rotatif (5) s'étendant entre les flasques (2,3), associé à des moyens de serrage des flasques autour de la colonne par rapprochement de ceux-ci, pour bloquer la colonne en position, sous le contrôle d'un levier de manoeuvre (6) actionnable par un utilisateur et déplaçable entre une position escamotée de déverrouillage de la colonne pour permettre son réglage en position et une position active de verrouillage en position de celle-ci, l'une des extrémités du tirant (5) étant associée à un écrou freiné (7) vissé sur une portion filetée (8) de ce tirant pour permettre un réglage de la course de fonctionnement des moyens de blocage et à des moyens de roulement (9) interposés entre cet écrou (7) et une portion fixe (10) du dispositif, comportant deux rondelles (11,12) entre lesquelles sont disposés des organes de roulement (13), dont l'une (12) est adaptée pour être en appui sur la portion fixe (10) du dispositif et l'autre, sur l'écrou (7) porté par le tirant rotatif (5), caractérisé en ce que des moyens (14) formant amortisseur du déplacement du tirant (5) et donc du levier de manoeuvre (6), sont disposés autour des moyens formant roulement (9) et comportent deux viroles complémentaires (15,16) entre lesquelles est disposé un matériau d'amortissement (17), dont l'une (15) est associée à la rondelle (12) des moyens de roulement (9) adaptée pour être associée à la portion fixe du dispositif et l'autre (16) est associée à l'autre rondelle (11) des moyens de roulement (9) adaptée pour être associée à l'écrou (7) porté par le tirant rotatif.

2. Dispositif selon la revendication 1, caractérisé en ce qu'un capot de protection (18) est prévu autour de l'extrémité du tirant et de l'écrou.

3. Dispositif selon la revendication 2, caractérisé en ce que le capot de protection (18) est venu de matière avec l'une des viroles (15,16) des moyens d'amortissement (14).

4. Dispositif selon l'une quelconque des revendications précédentes, caractérisé en ce que les organes de roulement sont formés par des aiguilles.

5. Dispositif selon l'une quelconque des revendications 1 à 3, caractérisé en ce que les organes de roulement sont formés par des billes.
